Europäisches Patentamt

European Patent Office

Office européen des brevets

(19)

(11) **EP 1 245 656 A1**

(12) **EUROPEAN PATENT APPLICATION**

(43) Date of publication:
**02.10.2002 Bulletin 2002/40**

(51) Int Cl.⁷: **C09J 7/02**, C09J 4/06,
C08L 33/08, C08L 33/10

(21) Application number: **01108135.3**

(22) Date of filing: **30.03.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **3M Innovative Properties Company
St. Paul, Minnesota 55133-3427 (US)**

(72) Inventors:
• **Welke, Siegfried
40699 Erkrath (DE)**
• **Smolders, Robert Remi Louis
2170 Merksem (BE)**
• **Kuester, Frank
40221 Düsseldorf (DE)**
• **Verheyen, Eddy, L.C.
1980 Hofstade (BE)**

(74) Representative: **Wilhelm, Stefan M. et al
Office of Intellectual Property Counsel,
c/o 3M Deutschland GmbH,
Carl-Schurz-Strasse 1
41453 Neuss (DE)**

(54) **Transparent pressure-sensitive adhesive layer**

(57)      The invention refers to a transparent pressure-sensitive adhesive layer

•    the pressure- sensitive adhesive of which comprises

(i) the reaction product obtainable by polymerizing a precursor comprising (a)one or more alkyl (meth)acrylate monomers the alkyl groups of which comprise independently from each other 4 to 20 carbon atoms, and
(b)one or more moderately polar Lewis base-functional copolymerizable monomers, and

(ii) one or more tackifying resins

wherein

•    the concentration of the alkyl acrylate monomer or monomers and the thickness of the pressure-sensitive adhesive layer are selected so that the pressure-sensitive adhesive layer has a 90° peel adhesion from polycarbonate after a dwell time of 72 as measured according to FINAT method no. 2 of at least 35 N/1.27 cm.

**Description**

The present invention relates to a transparent pressure-sensitive adhesive layer having a high 90° peel adhesion from polycarbonate of at least 35 N/1.27 cm after a dwell time of 72 h and preferably an advantageous humidity resistance and advantageous static shear performance. The present invention furthermore relates to a transparent multilayer laminate comprising at least a first pressure-sensitive adhesive layer and at least a second pressure-sensitive adhesive layer which is exposed and laminated onto said first pressure-sensitive adhesive layer, the pressure-sensitive adhesive of said second pressure-sensitive adhesive layer being aggressively tacky and said laminate preferably having an advantageous humidity resistance. The present invention furthermore relates to the manufacture of said transparent pressure-sensitive adhesive layer and said transparent multilayer laminate and to their use for bonding transparent substrates.

Background

A pressure-sensitive adhesive tape having a high 90° peel adhesion from polycarbonate is commercially available from 3M Company, St. Paul, MN, USA, under the designation "3M Tape # 4945". This pressure-sensitive adhesive tape has a thickness of about 1140 μm and is not transparent because it comprises glass bubbles as filler particles in order to create a foam having a good conformability to various surfaces.

A transparent pressure-sensitive adhesive material suitable for bonding polycarbonate substrates is disclosed, for example, in US S. N. 09/324,148 filed on June 2, 1999. This transparent adhesive is suggested for use in optical recording media such as DVDs, DVD-Rs, DVD-RWs, DVD-RAMs, DVRs, DVD Audios and DVD hybrids. For this application the adhesive is used as an adhesive layer with a thickness of typically from about 50 - 75 μm. Adhesive films with a thickness of about 50 μm were found to exhibit a 180° peel adhesion from polycarbonate after 72 hours, of from about 8.6 - 13.1 N/1.27 cm (corresponding to 61.8 - 94.8 oz/in).

US 5,028,484 discloses a transparent pressure-sensitive adhesive comprising

  (a) about 50 - 95 weight % of an ultraviolet radiation polymerized polymer of

    (i) one or more monomers which are predominantly alkyl acrylate, the alkyl groups of which have an average of 4 - 12 carbon atoms, and
    (ii) about 0 - 15 weight % of one or more strongly polar copolymerizable monomers or about 0-30 weight % of one or more moderately polar copolymerizable monomers, and

  (b) about 5 - 50 weight % of one or more tackifying resins which preferably are (poly)tert-butyl styrene tackifying resins.

This transparent adhesive is suggested for bonding various substrates including polypropylene, ABS and stainless steel. In the examples, a relatively thin pressure-sensitive adhesive layer with a thickness of 127 μm is described which has a 180° peel adhesion from ABS of, for example, 9.1 or 23.5 N/1.27 cm (corresponding to 72 and 185 N/dm). US 5,028,484 furthermore discloses in col. 7, line 50 to col. 8, line 16 thicker, foam-like pressure-sensitive adhesive tapes containing microspheres such as polymeric or glass microspheres. The resulting pressure-sensitive adhesive layers are non-transparent due to the presence of the microspheres.

WO 94/13,750 discloses an adhesive composition for bonding to polycarbonate surfaces which comprises a monomeric acrylic or methacrylic acid ester, a copolymerizable reinforcing monomer, a copolymerizing macromonomer and a photo initiator. In the examples, the acrylic acid is used as a strongly polar, reinforcing comonomer. Example 30 describes a pressure-sensitive adhesive layer with a thickness of about 1.27mm the pressure-sensitive adhesive composition of which comprises 92.2 weight % of isooctylacrylate, 4.8 weight % of acrylic acid and 3.0 weight % of macromonomer A the preparation of which is disclosed on page 12, line 30 to page 13, line 9. The pressure-sensitive adhesive layer exhibits a 90° peel adhesion from polycarbonate of about 26.2 N/1.27cm (corresponding to 206 N/dm) after 72 hours at 70 °C.

In view of the state of the art, the object of the present invention was to provide a transparent pressure-sensitive adhesive layer having a 90° peel adhesion from polycarbonate surfaces of at least 35 N/1.27 cm and furthermore preferably also an advantageous humidity resistance and advantageous static shear performance.

Summary of the invention

The present invention relates to a transparent pressure-sensitive adhesive layer

- the pressure-sensitive adhesive of which comprises

  (i) the reaction product obtainable by polymerizing a precursor comprising

  (a) one or more alkyl (meth)acrylate monomers the alkyl groups of which comprise independently from each other 4 to 20 carbon atoms,
  (b) one or more moderately polar Lewis base-functional copolymerizable monomers, and

  (ii) one or more tackifying resins

  wherein

- the concentration of the alkyl acrylate monomer or monomers and the thickness of the pressure-sensitive adhesive layer are selected so that the pressure-sensitive adhesive layer has a 90° peel adhesion from polycarbonate as measured according to FINAT method no. 2 after a dwell time of 72 h of at least 35 N/1.27 cm.

The present invention furthermore relates to a transparent multilayer laminate comprising

• a first pressure-sensitive adhesive layer the pressure-sensitive adhesive of which comprises the reaction product obtainable by polymerizing a precursor comprising

  (a) one or more alkyl (meth)acrylate monomers the alkyl groups of which comprise independently from each other 4 to 20 carbon atoms, and
  (b) one or more moderately polar Lewis base-functional copolymerizable monomers, and

• at least one exposed second pressure-sensitive adhesive layer laminated onto the first pressure-sensitive adhesive layer the pressure-sensitive adhesive of the second pressure-sensitive adhesive layer comprising the reaction product obtainable by polymerizing a precursor comprising

  (c) one or more alkyl (meth)acrylate monomers the alkyl groups of which have independently from each other 4 to 20 carbon atoms, and
  (d) one or more strongly polar copolymerizable monomers.

Detailed description of the invention

Pressure-sensitive adhesive materials which are used for the preparation of transparent pressure-sensitive adhesive layers of the present invention, comprise

  (i) the reaction product obtainable by polymerizing a precursor comprising

  (a) one or more alkyl (meth)acrylate monomers the alkyl groups of which have independently from each other 4 - 20 carbon atoms and
  (b) one or more moderately polar Lewis base-functional copolymerizable monomers, and

  (ii) one or more tackifying resins.

Useful alkyl (meth)acrylates (i.e., (meth)acrylic acid alkyl ester monomers) include linear or branched monofunctional unsaturated acrylates or methacrylates of non-tertiary alkyl alcohols, the alkyl groups of which have from 4 to 20, preferably from 4 to 14 and, in particular, from 4 to 12 carbon atoms. Examples of these lower alkyl acrylates used in the present invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl (meth)acrylate, n-butyl (meth)acrylate, 2-ethylhexyl (meth)acrylate, isononyl (meth)acrylate and dodecyl (meth)acrylate.
The polymerizable precursor preferably contains up to 5 and, in particular, 1 - 4 alkyl acrylates.
The precursor of the pressure-sensitive adhesive can contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred.

The amount of ester compounds of unsaturated aliphatic carboxylic acids other than acrylic acid preferably is not too high and, in particular, is less than 10 weight %, more preferably less than 5 weight % and especially preferably less than 2 weight % with respect to the mass of the alkyl acrylate component.

The polymerizable precursor furthermore contains one or more moderately polar Lewis base-functional copolymerizable monomers. Polarity (i. e., hydrogen bonding ability) is frequently described by the use of terms such as "strongly", "moderately" and "poorly". References describing these and other solubility terms include "Solvents paint testing manual", 3rd ed., G.G. Seward, Ed., American Society for Testing and Materials, Philadelphia, Pennsylvania, and "A three-dimensional approach to solubility", Journal of Paint Technology, Vol. 38, No. 496, pp.269 - 280.

The moderately polar Lewis base-functional copolymerizable monomers forming part of the polymerizable precursor, are preferably selected from a group comprising n-vinyl containing monomers, acrylonitrile, dimethyl amino propyl methacrylate, acryloyl morpholine and pyrrolidone ethyl acrylate. Especially preferred are n-vinyl containing monomers and, in particular, n-vinyl lactams such as, for example, n-vinyl pyrrolidone and n-vinyl caprolactam. N-vinyl caprolactam is especially preferred.

The polymerizable precursor preferably contains up to 5 and, in particular, 1 - 4 moderately polar Lewis base-functional copolymerizable monomers.

Examples for strongly polar monomers include acrylic acid, methacrylic acid and acryl amides. It was found by the present inventors that the presence of polar comonomers in the polymerizable precursor is usually detrimental to the humidity resistance of the pressure-sensitive adhesive materials. It was found that the pressure-sensitive adhesive materials used in the present invention preferably contain less than 2 wt.% strongly polar monomers with respect to the sum of the masses of the one or more alkyl acrylate monomers, and the one or more moderately polar Lewis base-functional copolymerizable monomers and, if present, any other copolymerizable monomer or monomers, more preferably less than 1 wt.% and especially preferably no polar comonomers.

The amount of the one or more alkyl acrylate monomers with respect to the sum of the masses of the one or more alkyl acrylate monomers, the one or more moderately polar Lewis base-functional copolymerizable monomers and, if present, any other copolymerizable monomer is selected together with the thickness of the pressure-sensitive adhesive layer so that such pressure-sensitive adhesive layer has a 90° peel adhesion from a polycarbonate surface of at least 35 N/1.27 cm as measured according to FINAT method no. 2. It was found by the present inventors that the amount of the alkyl acrylate monomer or monomers, respectively, preferably is between 59 and 80 wt.%, more preferably between 60 and 78 wt.% and especially preferably between 60 and 75 wt.% with respect to the sum of the masses of the polymerizable alkyl acrylate monomers and the copolymerizable monomer(s) as defined above.

The amount of the one or more moderately polar Lewis base-functional monomers with respect to the sum of the masses of the one or more alkyl acrylate monomers, the one or more moderately polar Lewis base-functional copolymerizable monomers and, if present, any other copolymerizable monomer preferably is between 20 and 41 wt. %, more preferably between 22 and 40 wt.% and especially preferably between 25 and 40 wt.%.

The pressure-sensitive adhesive materials used in the present invention also comprise one or more tackifying resins which can be added to the polymerizable precursor prior, during or after polymerization.

A wide range of suitable tackifying resins is commercially available. These include, for example, Foral 85 (glycerol ester of a highly stabilized resin), Foral 105 (pentaerytritol ester of hydrogenated resin), Stabilite ester 10 and Pentalyn H, manufactured and sold by Hercules Corp., PE Estergum and the like, manufactured by Arizona Chemical Company, and Sylvatac 40N, Sylvatac RX, Sylvatac 95 and the like, manufactured by Sylvachem Corp.

Various aliphatic hydrocarbon resins like Escorez 1304, manufactured by Exxon Chemical Company, and aromatic hydrocarbon resins based on $C_9$ compounds, $C_5$ compounds, dicyclopentadiene, coumarone, indene, styrene, substituted styrenes and styrene derivates and the like can also be used.

Hydrogenated and partially hydrogenated resins such as Regalrez 1018, Regalrez 1033, Regalrez 1078, Regalrez 1094, Regalrez 1126, Regalrez 3102, Regalrez 6108 , Regalite R 7100 etc., produced by Hercules Corp., are particularly useful tackifiers for the pressure-sensitive adhesive materials of the pressure-sensitive adhesive layers of the present invention. Various terpene phenolic resins of the type SP 560, manufactured and sold by Schenectady Chemical Inc., Nirez 1100, manufactured and sold by Reichold Chemical Inc., and Piccolyte S-100, manufactured and sold by Hercules Corp., can also be used. Various mixed aliphatic and aromatic resins such as Hercotex AD 1100, manufactured and sold by Hercules Corp., can be used as well.

Resins which are suitable for use in the pressure-sensitive adhesive materials of the present invention can also be taken from Satas, "Handbook of pressure-sensitive adhesive technology", 3rd edition, Ed. D.Satas, Satas & Associates, Warwick Rhode Island, p. 486. Especially preferred are also the poly (t-butyl styrene) (TBS) tackifying resins disclosed in US 5,028,484.

If the tackifier resins are added to the polymerizable precursor prior or during polymerization, the tackifier resins are preferably selected so that they do not substantially prohibit curing of the polymerizable precursor. Therefore, partially or more preferably highly hydrogenated tackifying resins are preferably used when polymerizing the polymerizable precursor in the presence of the tackifying resins.

Tackifying resins suitable for use in the pressure-sensitive adhesive materials of the present invention preferably have softening temperatures of from about 65 - 110 °C.

The tackifying resin or resins, respectively, and their respective amount are selected so that they are substantially compatible with the reaction product of the polymerizable precursor and preferably also with the polymerizable precursor. As used herein, the term "substantially compatible" means that there is no macroscopic phase separation between the reaction product of the polymerizable precursor and the tackifying resin or resins, respectively, in order to allow for a transparent pressure-sensitive adhesive material. Preferably, the adhesive is free of microscopic phase separation as well.

The amount of the tackifying resin or resins, respectively, with respect to the sum of the masses of the one or more alkyl acrylate monomers, the one or more moderately polar Lewis base-functional copolymerizable monomers and, if present, any other copolymerizable monomer or monomers preferably is at least 5 wt.% and more preferably at least 7.5 wt.%. The upper limit of the concentration range of the tackifying resin or resins, respectively, is less critical but it was found by the present inventors that concentrations of more than 75 wt.% do often not furthermore improve the properties of the pressure-sensitive adhesive material. Since the pressure-sensitive adhesive material used in the pressure-sensitive adhesive layer of the present invention needs to be transparent, the upper limit of the concentration range of the tackifying resin or resins, respectively, is preferably selected so that no macroscopic or microscopic phase separation occurs. The tackifying resin or resins, respectively, are preferably used in an amount of from 5 - 50 wt.%, more preferably of from 7.5 - 45 wt.%, particularly preferably of from 7.5 - 30 wt.% and especially preferably of from 10 - 25 wt.%. The pressure-sensitive adhesive material used in the present invention preferably contains 1 - 4, more preferably 1 - 3 and especially preferably 1 or 2 tackifying resins.

The polymerizable precursor of the reaction product contained in the pressure-sensitive adhesive materials useful in the present invention preferably contains a crosslinker component to increase the cohesive strength and the tensile strength of the resulting pressure-sensitive adhesive material. Useful crosslinkers include benzaldehyde, acetaldehyde, anthraquinone, various benzophenone-type and vinyl-halomethyl-s-triazine type compounds such as, for example, 2,4-bis(trichloromethyl)-6-p-methoxystyryl-s-triazine. Preferred are polyacrylic-functional monomers such as, for example, trimethylolpropane triacrylate, pentaerythritol tetraacrylate, 1,2-ethylene glycol diacrylate, tripropyleneglycoldiacrylate, dipropyleneglycoldiacrylate, 1,6-hexanediol diacrylate or 1,12-dodecanediol diacrylate. The compounds listed above, which can be substituted or unsubstituted, are intended to be illustrative and by no means limitative.

The crosslinking component to be used in the pressure-sensitive adhesive materials useful in the present invention preferably contains 1 - 5, especially between 1 - 3 and very particular 1 - 2 crosslinker compounds. Especially preferred crosslinker compounds are 1,6-hexanedioldiacrylate, dipropyleneglycoldiacrylate and tripropyleneglycoldiacrylate.

The concentration of the crosslinker compound or compounds, respectively, preferably is from 0.01 - 10 wt. %, more preferably from 0.02 - 5 wt.% and especially preferably from 0.05 - 2 wt.% with respect to the sum of the masses of the one or more alkyl acrylate monomers, the one or more moderately polar Lewis base-functional copolymerizable monomers and, if present, any other copolymerizable monomer or monomers.

The pressure-sensitive adhesive materials useful in the present invention may further comprise additives which need to be selected, however, in order not to adversely affect the transparency requirement of the pressure-sensitive adhesive material.

The term transparent as used above and below indicates that the transmission of the pressure-sensitive adhesive layer or the multilayer laminate of the invention, respectively, with a thickness of 1 mm each, is at least 70 % in the visible spectral range between 540 nm - 560 nm as measured by the test method described below. The transmission of the 1 mm thick pressure-sensitive adhesive layer or the laminate, respectively, is preferably at least 75% and more preferably at least 80% in the visible range.

Suitable additives are, for example, plasticizers which are preferably added in order to increase the conformability of the pressure-sensitive adhesive layers to rough surfaces. Suitable plasticizers include, for example, organo phosphates such as octyl diphenyl phosphate available as Santicizer® 141 from Solutia Inc., St. Louis, MO, USA., and classical monomeric phthalates such as dioctyl phthalate (DOP), dibutyl phthalate (DBP) and diisodecyl phthalate (DIDP).Plasticizers suitable for modification of acrylic PSAs of the present invention can also be taken from Satas, "Handbook of pressure-sensitive adhesive technology",3rd edition, Ed. D. Satas, Satas & Associates, Warwick Rhode Island, p. 491.

The pressure-sensitive adhesive materials may further comprise transparent fillers such as hydrophobic silica or micronized titanium dioxide. Hydrophobic silica is commercially available, for example, from Degussa, Hanau, as Aerosil R 972, R 974, R 976 or R 8200.

Other additives which may be used in the pressure-sensitive adhesive materials suitable in the present invention include solvents, chain transfer agents, polymer additives like, for example, those described in EP 0,349,216 or EP 0,352,901, and/or other adjuvents known in the tape art. Especially preferred is the addition of pigments, colorants and/or paints which impart color to the resulting PSA materials without adversely affecting their transparency and clarity. An example of a suitable paint is Yellow Permalink CTL-Druckfarbe (printing paint) which is obtainable from SICPA Druckfarben GmbH, Backnang, Germany.

The amount of one or more additives used in the present invention with respect to the sum of the masses of the one or more alkyl acrylate monomers, the one or more moderately polar Lewis base-functional copolymerizable monomers and, if present, any other copolymerizable monomer or monomers, is preferably not more than 50 wt.%, more preferably less than 35 wt.% and especially preferably from 0.1 - 25 wt.%.

The pressure-sensitive adhesive materials used in the pressure-sensitive adhesive layers according to the present invention can be obtained by applying generally known polymerization methods such as bulk, solution, emulsion or suspension polymerization. Due to environmental reasons bulk polymerization is often preferred in order to avoid using organic solvents.

The polymerization reaction is preferably started by means of a polymerization initiator and preferably proceeds via a radical polymerization mechanism. Useful examples of polymerization initiators include radiation activatable and, in particular, photoactivatable initiators such as, for example, benzoin ethers (e.g., benzoin methyl ether, benzoin isopropyl ether, substituted benzoin ethers such as anisoin methyl ether), acetophenones (e.g., 2,2-diethoxyacetophenone) or alpha-ketols (e.g., 2-methyl-2-hydroxy-propiophenone), and/or thermally activatable initiators such as, for example, organic peroxides (e.g., benzoyl peroxide and lauryl peroxide) and 2,2'-azobis(isobutyronitrile). Polymerization by means of actinic radiation and, in particular, photopolymerization and the addition of photoactivatable initiators are preferred. The initiator component preferably comprises between 1 - 3 and, in particular, between 1 - 2 initiator compounds. The initiator compound or compounds, respectively, are preferably present in an amount of 0.01 - 2.00 wt.%, in particular, between 0.05 - 1.00 wt.% and very specifically between 0.1 - 0.5 wt.% with respect to the sum of the masses of the one or more alkyl acrylate monomers, the one or more moderately polar Lewis base-functional copolymerizable monomers and, if present, any other copolymerizable monomer or monomers.

In a preferred method of preparation, a part of the initiator compound or compounds, respectively, is added to a mixture comprising the one or more alkyl acrylate monomers, the one or more moderately polar Lewis base-functional copolymerizable monomers and, if present, any further copolymerizable monomer or monomers. The mixture is then partly polymerized to a degree of typically 2 - 30 % to form a syrup of coatable viscosity of, for example, 300 - 20,000 cps (Brookfield) at ordinary room temperatures. The viscosity of the precursor can, if desired, also be adjusted by adding a small amount of typically less than 5 wt.% of a polymeric additive which preferably is a photopolymerizable polyacrylate as is described, for example, in WO 94/00,052, or by adding transparent fillers. The polymerization preferably proceeds as photopolymerization which is described, for example, in US 4,181,752. In a preferred embodiment, the polymerization is carried out with UV black lights having over 60 percent, and preferably over 75 percent of their emission spectra between 280 to 400 nm, with an intensity between about 0.1 to about 25 mW/cm$^2$. The exposure is typically between 900 -1,500 mJ/cm$^2$. The polymerization may be stopped either by removal of the radiation or heat source and/or introduction of, for example, radical scavenging oxygen.

The partially polymerized syrup-like mixture obtained is mixed with the remaining part of the initiator compound or compounds, respectively, and any further compounds, additives or adjuvants.

To produce the pressure-sensitive adhesive layers according to the present invention, the above syrup-like mixture is coated onto a backing, a carrier web or a release liner and polymerized in an inert, i.e. oxygen-free atmosphere such as, for example, in a nitrogen atmosphere.

In an especially preferred method of the present invention, the partly polymerized syrup is polymerized by using a thermally activatable initiator such as benzoyl proxide whereas for the subsequent curing of the syrup, the use of photoinitiators is preferred.

Above and below, the term "layer" is used to describe a structure whose thickness is substantially less than one or both of its length or width. If the thickness of the pressure-sensitive adhesive layer is substantially less than its length but not substantially less than its width, ribbon-type or stripe-type pressure-sensitive adhesive layers are obtained. If the thickness of the pressure-sensitive adhesive layer is substantially less than both its length and width, the pressure sensitive adhesive layer preferably has two, essentially parallel opposed surfaces and is often referred to as, for example, film, tape or disc. The term "substantially less" means that the ratio of the length and/or width of the pressure-sensitive adhesive layer over its thickness is preferably at least 5, more preferably at least 7.5 and especially preferably at least 10.

The pressure-sensitive adhesive layer of the present invention can be supported or unsupported.

Unsupported pressure-sensitive adhesive layers can be obtained, for example, by coating the syrup-like mixture on a first release liner, covering it with a second release liner and polymerizing it then between the two release liners; the first release liner may be replaced, for example, by a movable carrier web having a surface with release properties.

Unsupported pressure-sensitive adhesive layers when used or stored in the form of single sheets, films or stripes, are typically protected by two release liners while one release liner is usually sufficient when using or storing the pressure-sensitive adhesive layer in form of a roll. Suitable release liners are, for example, siliconized papers, siliconized polyesters, polyethylenes or polymer films treated with fluorochemicals. When using the pressure-sensitive adhesive layer film in form of a roll, the release liner preferably exhibits release properties on both sides with the backside typically exhibiting a lower adhesion to the pressure-sensitive adhesive layer than the front side.

Supported pressure-sensitive adhesive layers according to the present invention can be obtained, for example, by coating the syrup-like mixture onto a backing or carrier layer with subsequent polymerization of the pressure-sensitive adhesive layer between such backing or carrier layer, respectively, and a release liner. It is also possible and preferred to laminate an unsupported pressure-sensitive adhesive layer according to the present invention onto a backing or carrier layer, respectively, to provide a supported pressure-sensitive adhesive layer. Supported pressure-sensitive adhesive layers comprising one exposed pressure-sensitive adhesive layer according to the present invention, are referred to above and below as single-sided pressure-sensitive adhesive films. Supported pressure-sensitive adhesive layers comprising two exposed adhesive layers at least one of them being a pressure-sensitive adhesive layer according to the present invention, are referred to above and below as double-sided pressure-sensitive adhesive films according to the present invention.

Depending on the respective application, the carrier layer or backing may be selected from a group of materials comprising polymeric films of various stiffness such as, for example, polyolefins, polyesters, polycarbonates or polymethacrylates, papers, non-wovens, laminates (such as, for example, polyethylene or polyurethane foams laminated on both sides with permanent acrylic adhesives, or papers laminated or jig-welded with polyethylene terephthalates), one part mechanical fasteners (which are described, for example, in US 5,077,870) or metals. The thickness of the carrier layer typically varies between 25 μm and 3,000 μm, preferably between 25 and 1,000 μm. The carrier material should be selected such that the pressure-sensitive adhesive layer or layers, respectively, bond very strongly to it. Such a choice can be made easily and does not require any inventive input from the expert. If necessary, the carrier material may need to be treated with chemical primers or may be corona or plasma-treated. In double-sided pressure-sensitive adhesive films, the pressure-sensitive adhesive layers which are applied to the opposite sides of the carrier layer, may be different from each other or equal to each other. The carrier layer or backing preferably is transparent.

It is critical in the present invention that the thickness of the unsupported pressure-sensitive adhesive layer according to the invention or the thickness of the pressure-sensitive adhesive layer or layers according to the invention in supported one-sided or double-sided pressure-sensitive adhesive films is selected in conjunction with the concentration of the amount of the alkyl acrylate monomer(s) in the pressure-sensitive adhesive material of the pressure-sensitive adhesive layer of the invention to provide a high 90° peel adhesion of the unsupported pressure-sensitive adhesive layer or the supported pressure-sensitive adhesive layer or layers in the respective pressure-sensitive adhesive films, respectively, after a dwell time of 72 h of at least 35 N/1.27 cm from a polycarbonate surface. The 90° peel adhesion is measured according to FINAT method no. 2 specified below. Commercially available polycarbonate substrates having a smooth surface were employed. Such polycarbonate surfaces were protected against contamination and scratching by removable polymeric films before use.

The thickness of the pressure-sensitive adhesive layer of the present invention preferably is at least 500 μm, more preferably at least 750 μm and especially preferably at least 800 μm. Pressure-sensitive adhesive layers

- having a thickness of at least 500 μm,
- the pressure-sensitive adhesive materials of which have an alkyl acrylate concentration of between 60 - 75 wt.%,
- a concentration of the Lewis base functional copolymerizable monomer(s) of between 25 - 40 wt.%, and
- an amount of the tackifying resin or resins of at least 10 wt.%

are preferred whereby the percents by weight refer to the sum of the masses of the one or more alkyl (meth)acrylate monomers, the one or more moderately polar Lewis base-functional copolymerizable monomers and, if present, any other copolymerizable monomer or monomers.

The combination of

- a relatively high thickness of the pressure-sensitive adhesive layer,
- a relatively low polarity of the pressure-sensitive adhesive material of such pressure-sensitive adhesive layer,
- the selection of a relatively narrow concentration range for the one or more alkyl (meth)acrylate monomers, and
- the use of one or more tackifying resins

surprisingly provides a pressure-sensitive adhesive layer having a high 90° peel adhesion from a polycarbonate surface after a dwell time of 72 h of at least 35 N/1.27 cm, preferably of at least 40 N/1.27 cm, more preferably of at least 45 N/1.27 cm and especially preferably of at least 50 N/1.27 cm in conjunction with advantageous static shear values.

Pressure-sensitive adhesive layers according to the present invention which exhibit in addition to 90° peel values after a dwell time of 72 h of at least 35 N/1.27 cm from polycarbonate and static shear values from stainless steel at 70°C of at least 2,000 min, more preferably of at least 5,000 min and especially preferably of at least 7,500 min are especially preferred.

The pressure-sensitive adhesive layers of the present invention furthermore preferably exhibit a high humidity resistance as can be measured using the test method which is described in some detail in the test method section below. The pressure-sensitive adhesive layers of the present invention preferably exhibit no change in appearance as measured according to this test after 6 days and more preferably after 8 days.

The pressure-sensitive adhesive layers of the present invention are transparent at least in the wavelength range of visible light what can be qualitatively assessed by inspecting a sample of an unsupported pressure-sensitive adhesive layer with a thickness of 1,000 μm with the human eye at ambient conditions. If it is possible to see distinctly through such sample of the pressure-sensitive adhesive layer, such sample is referred to as transparent. The transparency of the pressure-sensitive adhesive layer is defined above and can be quantitatively measured according to the transmission test method given below.

It was furthermore found by the present inventors that transparent multilayer laminates comprising

- a first pressure-sensitive adhesive layer the pressure-sensitive adhesive of which comprises the reaction product obtainable by polymerizing a precursur comprising

  (a) one or more alkyl (meth)acrylates monomers the alkyl group of which comprise independently from each other between 4 to 20 carbon atoms, and
  (b) one or more moderately polar Lewis base-functional copolymerizable monomers, and

- at least one exposed second pressure-sensitive adhesive layer laminated onto the first pressure-sensitive adhesive layer the pressure-sensitive adhesive of which comprises the reaction product obtainable by polymerizing a precursor comprising

  (c)one or more alkyl (meth)acrylates monomers the alkyl group of which comprise independently from each other between 4 to 20 carbon atoms, and
  (d) one or more strongly polar copolymerizable monomers.

are characterized by advantageous properties.

Alkyl (meth)acrylates (i.e., (meth)acrylic acid alkyl ester monomers) which are suitable for both components (a) and (c) of the respective precursors of the transparent laminate, include independently from each other linear or branched monofunctional unsaturated acrylates or methacrylates of non-tertiary alkyl alcohols, the alkyl groups of which have from 4 to 20, preferably from 4 to 14 and, in particular, from 4 to 12 carbon atoms. Examples of these lower alkyl acrylates used in the present invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl (meth)acrylate, n-butyl (meth)acrylate, 2-ethylhexyl (meth)acrylate, isononyl (meth)acrylate and dodecyl (meth)acrylate.

Alkyl (meth)acrylate monomers suitable for the second pressure sensitive adhesive layer additionally include alkyl (meth)acrylate monomers with an alkyl group having 1-3 C atoms such as, for example, methyl (meth)acrylate, ethyl (meth)acrylate or n-propyl (meth)acrylate.

The polymerizable precursors of both the first and the second pressure-sensitive adhesive layer of the transparent laminate preferably contain independently from each other up to 5 and, in particular, 1 - 4 alkyl acrylates.

The precursors of both the first and the second pressure-sensitive adhesive layer of the transparent laminate can contain independently from each other alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid in the respective precursor preferably is not too high and, in particular, independent from each other is less than 10 wt.%, more preferably less than 5 wt.% and especially preferably less than 2 wt.% with respect to the mass of the respective one or more alkyl (meth)acrylate monomers.

The polymerizable precursor of the first pressure-sensitive adhesive layer furthermore contains one or more moderately polar Lewis base-functional copolymerizable monomers. The moderately polar Lewis base-functional copolymerizable monomers forming part of the polymerizable precursor, are preferably selected from a group comprising n-vinyl containing monomers, acrylonitrile, acryloyl morpholine, pyrrolidone ethyl acrylate and dimethyl amino propyl methacrylate. Especially preferred are n-vinyl containing monomers and, in particular, n-vinyl lactams such as, for example, n-vinyl pyrrolidone and n-vinyl caprolactam. N-vinyl caprolactam is especially preferred.

The polymerizable precursor of the first pressure-sensitive adhesive layer preferably contains up to 5 and, in particular, 1 - 4 moderately polar Lewis base-functional copolymerizable monomers.

The amount of the one or more alkyl (meth)acrylate monomers in the precursor of the pressure-sensitive adhesive material of the first adhesive layer (= component (a)) with respect to the sum of the masses of the one or more alkyl acrylate monomers, the one or more moderately polar Lewis base-functional copolymerizable monomers and, if present, any further copolymerizable monomer or monomers is preferably between 59 and 80 wt.%, more preferably between 60 and 78 wt.% and especially preferably between 60 and 75 wt.%.

The amount of the one or more moderately polar Lewis base-functional copolymerizable monomers with respect to the masses of the one or more alkyl acrylate monomers, the one or more moderately polar Lewis base-functional copolymerizable monomers and, if present, any further copolymerizable monomer or monomers preferably is between 20 - 41 wt.%, more preferably between 22 - 40 wt.% and especially preferably between 25 - 40 wt.%.

It was found by the present inventors that the presence of strongly polar comonomers in the polymerizable precursor of the pressure-sensitive adhesive material of the first pressure-sensitive adhesive layer is usually detrimental to the humidity resistance of the transparent multilayer laminate. This is true, in particular, in a preferred embodiment of the transparent multilayer laminate wherein the ratio of the thickness of the second pressure-sensitive adhesive layer over the thickness of the first pressure-sensitive adhesive layer preferably is less than 0.2, more preferably less than 0.15 and especially preferably less than 0.1. In this preferred embodiment, the bulk properties of the transparent multilayer laminate including its humidity resistance and static shear performance are dominated by the properties of the first pressure-sensitive adhesive layer.

The pressure-sensitive adhesive material of the first pressure-sensitive adhesive layer may contain (what is, however, generally less preferable) one or more tackifying resins which, if present, are preferably selected from the tackifying resins specified above for the transparent adhesive layer of the present invention. The amount of the tackifying resin or resins, respectively, with respect to the sum of the masses of the one or more alkyl (meth)acrylate monomers, the one or more moderately polar Lewis base-functional copolymerizable monomers and, if present, any other copolymerizable monomer or monomers in the pressure-sensitive adhesive material of the first pressure-sensitive adhesive layer preferably is at least 5 wt.% and more preferably at least 7.5 wt.%. The upper limit of the concentration range of the tackifying resin or resins, respectively, is less critical but it was found by the present inventors that concentrations of more than 75 wt.% do often not furthermore improve the properties of the pressure-sensitive adhesive material. Since both the first and the second pressure-sensitive adhesive material used in the multilayer laminate of the present invention need to be transparent, the upper limit of the concentration range of the tackifying resin or resins, respectively, in the first pressure-sensitive adhesive layer (if present) is preferably selected so that no macroscopic or microscopic phase separation occurs. The tackifying resin or resins, respectively, in the first pressure-sensitive adhesive layer (if present) are preferably used in an amount of from 5 - 50 wt.%, more preferably of from 7.5 - 45 wt.%, particularly preferably of from 7.5 - 30 wt.% and especially preferably of from 10 - 25 wt.%. The pressure-sensitive adhesive material used in the first pressure-sensitive adhesive layer of the laminate may contain 1 - 4, more preferably 1 - 3 and especially preferably 1 or 2 tackifying resins.

The polymerizable precursor of the second pressure-sensitive adhesive layer furthermore contains one or more strongly polar copolymerizable monomers (= component (d)) which are preferably selected from a group comprising acrylic acid, methacrylic acid, fumaric acid, maleic acid and acrylonitrile with acrylic acid and methacrylic acid being preferred.

The polymerizable precursor of the pressure-sensitive adhesive of the second pressure-.sensitive adhesive layer can optionally comprise more moderately polar copolymerizable monomers which are preferably selected from the group of moderately polar Lewis base-functional copolymerizable monomers disclosed. The presence of moderately polar copolymerizable monomers in the precursor of the pressure-sensitive adhesive material of the second pressure-sensitive adhesive layer is, however, not preferred.

The amount of the one or more alkyl (meth)acrylates in the precursor of the pressure-sensitive adhesive material of the second pressure-sensitive adhesive layer (= component (c) ) with respect to the sum of the masses of the one or more alkyl acrylate monomers, the one or more strongly polar copolymerizable alkyl (meth)acrylates and, if present, any further copolymerizable monomer or monomers is preferably between 85 and 99 parts, more preferably between 90 and 98 parts and especially preferably between 93 and 97 parts.

The precursor of the pressure-sensitive adhesive material of the second pressure-sensitive adhesive layer can optionally comprise one or more tackifying resins which, if present, are preferably selected from the group of tackifying resins listed above for the pressure-sensitive adhesive layer of the present invention.

The precursor of the pressure-sensitive adhesive material of both the first and second pressure-sensitive adhesive layer, respectively, of the transparent multilayer laminate preferably comprises one or more cross-linking compounds. The cross-linking compound or compounds and their respective concentration in the precursors of the first and second pressure-sensitive adhesive layer are selected independently from each other as disclosed above for the pressure-sensitive adhesive layer of the present invention.

The pressure-sensitive adhesive materials of the first and second pressure-sensitive adhesive layer of the transparent laminate may comprise further additives which need to be selected, however, in order not to adversely affect the transparency requirement of the multilayer laminate. Suitable additives for both the first and second pressure-sensitive adhesive layers include independently from each other but are not restricted to plasticizers, transparent fillers and pigments, solvents, chain transfer agents and transparent colorants and/or paints.

The transparent multilayer laminate of the present invention is obtained by laminating the first and the second pressure-sensitive adhesive layer on top of each other. This is different from the multilayer tape constructions disclosed in US 5,028,484 where a plurality of copolymerizable coatable compositions are coated on top of each other with subsequent irradiation-polymerization of the stack of coated layers. It is claimed in US 5,028,484 that the photopolymerizable monomers of the different layers migrate through the respective layers thereby strengthening the bonding of the resulting multilayer tape constructions.

It was found by the present inventors that the first pressure-sensitive adhesive layer and the second pressure-sensitive adhesive layer bond very strongly to each other upon lamination. Because of the strong bond formed between the first and the second pressure-sensitive adhesive layer, these are preferably laminated without using an interfacial primer layer.

The first step of preparing the transparent multilayer laminate usually consists of preparing the first pressure-sensitive adhesive material by applying generally known polymerization methods such as bulk, solution, emulsion or suspension polymerization. Due to environmental reasons, bulk polymerization is often preferred in order to avoid using organic solvents.

The polymerization reaction is preferably started by means of a polymerization initiator and preferably proceeds via a radical polymerization mechanism. Useful examples of polymerization initiators include thermally activatable and radiation-activatable and, in particular, photoactivatable initiators which are preferably selected from the group of photoactivatable initiators disclosed above for the pressure-sensitive adhesive layer of the present invention.

In a preferred method, a coatable, partly polymerized solventless syrup is prepared first which is subsequently coated on a carrier web or a release liner and photopolymerized in an inert gas atmosphere.

The first pressure-sensitive adhesive layer can be unsupported or supported preferably using the backings or carrier layers disclosed above. The first pressure-sensitive adhesive layer is prepared using the methods disclosed above for the pressure-sensitive adhesive layer of the present invention so that the person skilled in the art is referred to the detailed description given above. The first pressure-sensitive adhesive layer is preferably unsupported but supported film constructions using transparent backing(s) can be used as well.

The second pressure-sensitive adhesive layer can be prepared by any of the methods cited above for the first pressure-sensitive adhesive layer, but is preferably prepared by solution polymerization as disclosed in US Reissue 24,906 (Ulrich). The second pressure-sensitive adhesive layer is preferably unsupported but supported film constructions using transparent backing(s) can be used as well.

Based on the above, the transparent multilayer laminate can exhibit various constructions comprising one or more first pressure-sensitive adhesive layers and one or more second pressure-sensitive adhesive layers.

In the least complicated construction, one or two unsupported second pressure-sensitive adhesive layers are laminated onto one or onto the two opposed surfaces of a first unsupported pressure-sensitive adhesive layer, respectively, without using an interfacial primer layer. The lamination can be performed, for example, by pressing the second pressure-sensitive layer onto the first pressure-sensitive adhesive layer using commonly available lamination equipment which employs pressurized opposing rollers to adhere the layers together along an advancing bond line thus preventing the entrapment of air at the interface between the two adhesive layers. The first and/or second pressure-sensitive adhesive layer can optionally be heated during the lamination.

The thickness of the first unsupported pressure-sensitive adhesive layer preferably is at least 500 $\mu$m, more preferably at least 750 $\mu$m and especially preferably at least 800 $\mu$m whereas the thickness of the second pressure-sensitive adhesive layer is independently from each other preferably from 20 - 200 $\mu$m, more preferably from 25 - 100 $\mu$m and especially preferably from 30 - 60 $\mu$m. In the example section below, the first pressure-sensitive adhesive layer in a three-layer laminate construction of a second/a first/a further second pressure-sensitive adhesive layer, is also referred to as core layer whereas the second pressure-sensitive adhesive layers (which can be the same or different from each other) are also designated as skin layers.

In this construction of the transparent multilayer laminate, the properties of at least one of its exposed surfaces correspond to the surface properties of the second pressure-sensitive adhesive layer whereas the bulk properties of the multilayer laminate including its favourable humidity resistance and static shear performance are dominated by the properties of the first pressure-sensitive adhesive layer.

In a second preferred embodiment, the transparent multilayer laminate comprises a transparent backing bearing on one or two of its opposed surfaces, respectively, a first pressure-sensitive adhesive layer. At least one second pressure-sensitive adhesive layer is laminated onto at least one of the first pressure-sensitive adhesive layers.

The transparent multilayer laminates of the present invention may exhibit various other constructions so that they can be optimized with respect to the bonding of various substrates.

All concentrations above and below unless indicated otherwise are given as weight percent (wt.%) with respect to the sum of the masses of the one or more alkyl acrylate monomers, the one or more moderately polar Lewis base-functional copolymerizable monomers and, if present, any other copolymerizable monomer or monomers. This means in other words that the concentration values in wt.% given for the one or more alkyl acrylate monomers, the one or more moderately polar Lewis base-functional copolymerizable monomers and, if present, any other copolymerizable monomer or monomers, add up to 100%. The concentration (in wt.%) of any other compounds of the transparent adhesive layer or the first or second adhesive layer, respectively, of the transparent laminate (which concentration is sometimes also referred to in the literature as pph ["parts per hundred"]) is given relative to the sum of the masses of the polymerizable monomers, i.e. relative to the sum of the masses of the one or more alkyl acrylate monomers, the one or more moderately polar Lewis base-functional copolymerizable monomers and, if present, any other copolymerizable monomer or monomers.

The transparent pressure-sensitive adhesive layer and the transparent multilayer laminates, respectively, according to the present invention are suitable for various bonding applications. They are particularly preferred, however, for bonding of one or more transparent substrates such as polycarbonate, PMMA or glass.

The following examples are intended to illustrate the invention further without limiting it. First, however, certain test methods utilized in the present invention will be described.

Test methods

*90° peel adhesion*

90° peel adhesion at 300 mm/min was measured according to Federation Internationale des Fabricants Europeens et Transformateurs d'Adhesifs et Thermocollants sur Papiers et autres Supports (FINAT) test method no. 2 with the following exceptions:

1. The pressure-sensitive adhesive layer, pressure-sensitive adhesive films or multilayer laminates of the present invention, respectively, were allowed to dwell on the substrates to be tested for 5 minutes and 72 hours, respectively, rather than 20 minutes and 24 hours as called for by the FINAT test.

2. The width of the pressure-sensitive adhesive layer, pressure-sensitive adhesive films or multilayer laminates of the present invention, respectively, was 1.27 cm rather than 2.5 cm as called for by the test.

3. A 150 µm thick aluminum strip having a width of 1.6 cm is applied by hand to one side of the pressure-sensitive adhesive layer, pressure-sensitive adhesive films or multilayer laminates of the present invention, respectively, to form a non-extendible backing.

4. A 6.8 kg roller was used to apply the pressure-sensitive adhesive layer, pressure-sensitive adhesive films or multilayer laminates of the present invention, respectively, to the substrate rather than 2 kg as required by the method.
     Substrates employed were MAKROLON™ polycarbonate, PLEXIGLASS™ XT polymethyl methacrylate, TROVIDUR ™ ET polyvinylchloride and stainless steel. Float glass (air side) was used as a substrate, as called for by the method, polymeric substrates had a thickness of 2 mm. The glass was 3 mm thick. Both the polymeric and glass substrates were cleaned by wiping with a tissue saturated in isopropanol. The stainless steel substrate was cleaned by a) wiping with a tissue saturated with methyl ethyl ketone (MEK), b ) wiping with a tissue saturated in diacetone alcohol and finally c) wiping with a tissue saturated with a 1:1 by volume mixture of water and isopropanol. The stainless steel substrate was allowed to dry in air briefly before each subsequent cleaning step.

5. Results were reported in N/1.27 cm rather than N/ 2.5 cm as called for by the method.

*Static shear at 70° C*

A standard static shear test was performed at elevated temperature according to Pressure Sensitive Tape Council (Chicago, Ill. /USA) PSTC - 7 (Procedure C). The test was performed at 70°C rather than 49°C (120° F) as called for by the method. The substrates employed were stainless steel and MAKROLON™ polycarbonate. The MAKROLON™ polycarbonate was cleaned by wiping with a tissue saturated in isopropanol. The stainless steel substrate was cleaned by a) wiping with a tissue saturated with methyl ethyl ketone (MEK), b) wiping with a tissue saturated in diacetone alcohol and finally c) wiping with a tissue saturated with a 1:1 by volume mixture of water and isopropanol. The stainless steel substrate was allowed to dry in air briefly before each subsequent cleaning step.

The bonded sample area was 2.54 cm in the vertical direction by 1.27 cm in the width direction (rather than 1.27 cm x 1.27 cm as call for by the method). In instances where the test specimen was an unsupported pressure-sensitive adhesive layer, a strip of anodized aluminum foil was superimposed over the pressure-sensitive adhesive layer to provide a means of hanging the weight as described in PSTC-7. The pressure-sensitive adhesive layer, pressure-sensitive adhesive films or multilayer laminates of the present invention, respectively, were bonded to the substrate by placing a 1 kg weight over the bonded area for 5 minutes. The shear stand with the sample was placed in a forced air oven held at 70° C for 10 min to condition it and then a 750 g load (rather than 1 kg as called for by the method) was hung from the end of the aluminum strip bonded to the pressure-sensitive adhesive layers, pressure-sensitive adhesive films or multilayer laminates of the present invention, respectively.

Time to failure for the adhesive bond was recorded in minutes.

*Humidity test*

Samples of pressure-sensitive adhesive layers, pressure-sensitive adhesive films or multilayer laminates of the present invention, respectively, measuring 2.54 cm x 2.54 cm were used to bond two 3 mm thick glass plates to one another. The laminate was pressed together by rolling over with a rubber hand roller and applying as much force as possible by hand pressure. The laminate was placed in a heated humidity chamber at a temperature of 35 °C and a relative humidity of 98 %. The temperature was raised linearly from 35 °C to 75 °C and back to 35 °C within a period of 6 hours. The 6 hour temperature cycle was continued until changes in appearance (milky appearance of the adhesive layer starting at the edges) could be observed or terminated after 18 days when no changes could be observed after that time.

*Transmission of visible light*

Regular transmittance ($T_r$) was measured according to ASTM D 1746-97. A 1 mm thick sample of the pressure-sensitive adhesive layer or multilayer laminate, respectively, of the present invention, was suspended as an unsupported film in a cuvette holder and placed in the beam of a UV-visible spectrophotometer, commercially available as 550 SE from Perkin-Elmer Associates. The spectrophotometer had been adjusted so that when no sample was in the beam, a transmittance of 100% was indicated. The average value of regular transmittance, $T_r$, in the range of 540 nm to 560 nm was recorded as called for by the method.

Percent regular transmittance, $T_r$, can be calculated as follows:

$$T_r = 100 \, I_r / I_0$$

where:

$I_r$ = light intensity with the specimen in the beam and $I_0$ = light intensity with no specimen in the beam.

Materials used in the examples

*Monomers*

2-ethyl hexyl acrylate (2-EHA)
Isooctyl acrylate (IOA)
Acrylic acid (AA)
N-vinyl caprolactam (NVC) from BASF, Ludwigshafen, Germany
Pyrrolidone ethyl acrylate (PYEA)
Isobornylacrylate (IBA) from Isuzu, Japan

*Tackifiers*

(1) REGALREZ 6108 from Hercules, partially hydrogenated hydrocarbon thermoplastic resin derived from petrochemical feedstocks, Ring & ball softening point 103° C, $M_N$ = 825, $M_W$ = 1250, Mz = 1850
(2) REGALITE R 7100 from Hercules, partially hydrogentated hydrocarbon thermoplastic resin derived from petrochemical feedstocks, Ring & ball softening point 102° C, $M_N$ = 625, Mw = 1000, $M_Z$ =1525

*Plasticizer*

Octyl diphenyl phosphate available as SANTICIZER 141 from Solutia Europe SA/NV (Louvain-la-Neuve, Belgium)

*Other*

Irgacure™ 651, 2,2-dimethoxy-2-phenylacetophenone available as photoinitiator (Ciba-Geigy, Basel, Switzerland)
Hexanediol diacrylate (HDDA), a crosslinker
Benzoyl peroxide (BPO), a thermal free-radical initiator

Examples

*Example 1*

*Syrup preparation by thermal method*

2-Ethyl hexyl acrylate (2-EHA, 61.4 wt.%) and N-vinyl caprolactam (NVC, 38.6 wt.%) were combined with 0.1 wt.% benzoyl peroxide (BPO) and heated to ca. 60 - 70° C in a vessel purged with nitrogen. The temperature was held at ca. 60 °C until about 6 - 7 % conversion to polymer was reached. The syrup had a viscosity in the range of 2000 to 7000 mPa·s. The syrup was then cooled to about 35 °C and simultaneously purged with air to slow and eventually stop the polymerization of the monomers. Tackifier (Regalrez 6108, 12.5 wt.%) and 1.1 wt.% plasticizer (Santicizer 141) were then added while the syrup was still warm and mixing was continued until a homogeneous syrup was obtained. Hexanediol diacrylate (HDDA, 0.07 wt.%) were added and mixed until homogeneous. Irgacure 651 photoinitiator was then added in the amount of 0.20 wt.%.

*Coating and curing of the syrup to a finished pressure-sensitive adhesive layer*

The syrup described above was degassed under vacuum and then coated with a knife coater onto a 50 µm thick transparent siliconized polyester release liner at a thickness of ca. 1000 µm. The syrup layer was then covered with a second 50 µm thick transparent siliconized polyester release liner. The laminate thus prepared was passed under medium pressure mercury vapor (UV) lamps to essentially complete the polymerization to a pressure-sensitive adhesive layer also having a thickness of ca.1000 µm. The total amount of energy to which the adhesive was exposed was ca. 800 mJ/cm$^2$.
The pressure-sensitive adhesive layer thus prepared was tested according to the methods given above under Test methods above. Composition of the pressure-sensitive adhesive used in the pressure-sensitive adhesive layer is summarized in table 1 and test results are summarized in tables 2 and 3.

*Example 2*

Example 1 was repeated with the exception that the plasticizer was omitted and the levels of tackifier, 2-ethyl hexyl acrylate (2-EHA) and N-vinyl caprolactam (NVC) were adjusted slightly to the levels shown in table 1.
Polymerization was conducted by the same technique as employed in example 1.

*Examples 3 - 7*

Examples 3 - 7 were prepared by first preparing a syrup in a glass jar using UV light. Monomers (2-EHA and NVC), tackifier and plasticizer (if present), as well as 0.04 wt.% Irgacure 651 photoinitiator, were combined in the glass jar by first melting the NVC, adding it to the liquid 2-EHA, dissolving the tackifier in the 2-EHA / NVC solution by stirring, adding the plastizicizer and finally the photoinitiator. The resulting mixture was degassed by purging with nitrogen and then exposed to UV radiation from a 300 watt OSRAM Ultra VITALUX UV lamp for about ca 4 - 5 minutes to give a viscosity of ca. 1000 mPa·s (cps). The polymerization was stopped by removing the UV light source, opening the jar and stirring air into the syrup. The monomer conversion was estimated to be 8 - 10 %.

This procedure differs from that of examples 1 - 2 in that in examples 1 - 2 the tackifier and plasticizer are added after formation of the syrup and in examples 3 - 7 the tackifier and plasticizer (if present) are present during the formation of the syrup.

An additional portion of Irgacure 651 photoinitiator (0.16 wt.%) was mixed into the syrup as well as 0.12 wt.% hexanediol diacrylate (HDDA).

The syrup was then degassed under vacuum and polymerized between dual transparent polyester release liners at a thickness of 1000 μm as in example 1 to give the respective pressure-sensitive adhesive layers.

*Example 8*

Example 1 was repeated with the following exceptions:

1. the tackifier REGALREZ 6108 was replaced by REGALITE R 7100 and
2. the amount of benzoyl peroxide (BPO) used to make the syrup was reduced from 0.10 wt.% to 0.02 wt.%.

The transmission of the pressure-sensitive adhesive layer of example 8 was measured according to the method given under Test Methods above. Regular transmittance was measured as 82 % according to the test method given above.

*Comparative examples 1 - 3*

Comparative examples 1 - 3 were prepared by the procedure used for examples 3 - 7 with the exception that both the tackifier and plasticizer were omitted. Amounts of 2-EHA and NVC were varied in the amounts shown in Table 1.

Test results in tables 2 and 3 show both low static shear values and low peel adhesion values for the resulting pressure-sensitive adhesive layers.

*Comparative examples 4 - 6*

Comparative examples 4-6 were prepared by the method used for examples 3 - 7.

*Comparative example 7*

Acrylic-based transparent bonding tape # 4910 commercially available from 3M Company, having a thickness of ca. 1000 μm and comprising a hydrophilic, strongly polar copolymerizable monomer, was tested using the same test methods as employed for tapes of the invention.

Test results show a 90° peel adhesion from polycarbonate of 23 N/1.27 cm. Poor resistance to humidity was also observed as shown in table 4.

*Comparative example 8*

Opaque bonding tape # 4945 commercially available from 3M Company shows good peel adhesion from polycarbonate and good static shear from stainless steel. It is not transparent, however, as it comprises an acrylic-based core layer filled with glass bubbles used to create a foam which provides good conformance. Aggressive pressure-sensitive adhesive skins are present on both surfaces of the core to insure a good bonding to the substrate. Bonding tape # 4945 which is a three-layer sandwich has a total thickness of 1140 μm.

Table 1:

| Example | 2-EHA [wt.%] | NVC [wt.%] | HDDA [wt.%] | | | Tackifier [ wt.%] | Plasticizer [wt.%] |
|---|---|---|---|---|---|---|---|
| | | | | | | *Chemical composition* | |
| 1 | 61.4 | 38.6 | 0.07 | | | 12.5 (1) | 1.1 |
| 2 | 65.9 | 34.1 | 0.07 | | | 13.6 (1) | 0 |
| 3 | 70.0 | 30.0 | 0.12 | | | 15.0 (1) | 0 |
| 4 | 70.0 | 30.0 | 0.12 | | | 25.0 (1) | 0 |
| 5 | 65.0 | 35.0 | 0.12 | | | 10.0 (1) | 5.0 |
| 6 | 70.0 | 30.0 | 0.12 | | | 10.0 (1) | 5.0 |
| 7 | 64.3 | 35.7 | 0.12 | | | 9.5(1) | 9.5 |
| 8 | 61.4 | 38.6 | 0.07 | | | 12.5 (2) | 1.1 |
| C1 | 68.0 | 32.0 | 0.12 | | | 0 | 0 |
| C2 | 80.0 | 20.0 | 0.12 | | | 0 | 0 |
| C3 | 90.0 | 10.0 | 0.12 | | | 0 | 0 |
| C4 | 90.0 | 10.0 | 0.12 | | | 15.0 (1) | 0 |
| C5 | 80.0 | 20.0 | 0.12 | | | 15.0 (1) | 0 |
| C6 | 58.7 | 41.3 | 0.12 | | | 8.7(1) | 0 |
| | | | | | | | |
| | | | | | | | |

(1) Regalrez 6108 tackifier

(2) Regalite R 7100 tackifier

Table 2:

| Ex. | 90° Adhesion [N /1.27 cm] | | | | |
|---|---|---|---|---|---|
| | *90° peel adhesion after 72 h from various substrates *(peel rate of 300 mm/min)* | | | | |
| | Polycarb. | PMMA | PVC | Glass (air side) | Stainless steel |
| 1 | > 60, sh | > 44 sh | > 62, sh | > 22, sh | > 27 sh |
| 2 | > 59, sh | -- | -- | -- | 39 sh |
| 3 | 41, s | | | | |
| 4 | > 76 sh | | | | |
| 5 | 42, s | | | | |
| 6 | 39, s | | | | |
| 7 | 54 s | | | | |
| 8 | > 71 sh | 34 sh | | 33 s | |
| C1 | >28, sh | | | | |
| C2 | 21 s | | | | |
| C3 | 21 s | | | | |
| C4 | 29 s | | | | |

S = smooth peel with no residue on the substrate Sh = shocky peel, difficult to measure quantitatively * 3 day dwell at 23 °C

Table 2: (continued)

| 90° peel adhesion after 72 h from various substrates *(peel rate of 300 mm/min) | | | | | |
|---|---|---|---|---|---|
| Ex. | 90° Adhesion [N /1.27 cm] | | | | |
| | Polycarb. | PMMA | PVC | Glass (air side) | Stainless steel |
| C5 | 25, s | | | | |
| C6 | 7.6 s | | | | |
| C7 | 23 s | 28 s | 31 s | 30 s | 37 s |
| C8 | > 52 sh | 49 s | 98 s | 64 s | 62 s |

S = smooth peel with no residue on the substrate
Sh = shocky peel, difficult to measure quantitatively
* 3 day dwell at 23 °C

Table 3:

| Static shear at elevated temperature & humidity resistance | | | |
|---|---|---|---|
| Example | Static shear at 70° C [min] | | Humidity resistance |
| | Stainless steel | Polycarbonate | Days |
| 1 | > 10,000 | 2,450 af | 9 |
| 2 | > 10,000 | > 10,000 | 9 |
| 3 | 700, af | 413 af | 10 |
| 4 | 500, af | 144 af | 3 |
| 5 | > 7,900 af | > 10,000 | 10 |
| 6 | 100, af | 191 af | 6 |
| 7 | 490 af | | 9 |
| 8 | > 10,000 | | --- |
| C1 | 100, af | | > 18 |
| C2 | 3, af/cf | | 9 |
| C3 | 1, af/cf | | 3 |
| C4 | 1, af/cf | | 9 |
| C5 | 2, af | | 3 |
| C6 | > 10,000 | | 15 (inherently white tape) |
| C7 | > 10,000 | 100 af | 3 |
| C8 | > 10,000 | 3,880 af | --- (inherently white tape) |

af = adhesive failure
cf = cohesive failure
--- Not measured

*Examples 9 - 14*

Transparent multilayer laminates were prepared which comprised a thicker first pressure-sensitive adhesive layer of 2-EHA-NVC copolymer (core) and a thinner second pressure-sensitive adhesive layers on each side of the core (skins). Each skin comprises an acrylic pressure-sensitive adhesive material comprising one or more strongly polar comonomers, on each surface. The cores comprise in each case EHA-NVC copolymer. Tackifier and plasticizer amounts are varied whereby example 11 contains no tackifier or plasticizer. In particular, each skin comprised a terpolymer of isooctyl acrylate, methyl acrylate and acrylic acid.

The cores were prepared by radiation polymerization techniques essentially the same as that described in example 1.

The skins were prepared by first preparing an acrylic pressure-sensitive adhesive terpolymer of isooctyl acrylate (IOA), methyl acrylate (MA) and acrylic acid (AA) in a ratio of 65, 30 and 5 weight % respectively, in organic solvent, applying a layer of the solution polymer to a release liner and then drying the layer of adhesive to form a transfer tape having a thickness of ca. 60 µm.

The transfer tape was then laminated carefully to each side of the core so that no bubbles were included. Lamination was performed using a rubber-coated hand roller. Samples were allowed to age at least 3 days at 23 °C to allow for adhesion build-up between the core layer and the PSA skins. No primer was necessary to effect a good bond between the core and the skin.

Laminates prepared in examples 9 - 14 were then tested for peel adhesion, static shear and humidity resistance. A 90° peel test after only a 5 minute dwell time was also included to show the aggressive quick-stick nature of the PSA skins selected.

Example 10 showed a regular transmittance of 86% as measured by the test method given above.

### Comparative example 9

Comparative example 9 shows an acrylic core comprising 3M tape # 4910 as a core and acrylic skins, each comprising acrylic acid. The skins are laminated onto the core with no primer in between. This sample shows failure in the bond between the core and skins as shown in table 5 for both the 90° peel adhesive test and static shear test.

### Comparative example 10

Comparative example 10 is the same as comparative example 8, except that a prime coat was applied to the surfaces of the skins to be bonded to the core prior to lamination.

### Examples 15 and 16

Examples 15 and 16 both comprise EHA-NVC cores in combination with acrylic acid-containing skins. Polyamide primer layer Makromelt 6240 from Henkel is present in a thickness of ca. 5 µm at both interfacial surfaces between the adhesive layers.

The test results show that the presence of the primer layer is not necessary and actually results in a decrease of the bonding strength. The use of the primer layer is therefore less favourable.

### Example 17

Example 17 shows a 2-EHA-NVC pressure-sensitive adhesive layer according to the invention, i. e. no laminate. The 90° peel adhesion after a dwell time of 5 minutes was 18 N /1.27 cm with a shocky behavior, considerably less than when a more aggressive acrylic-acid containing skin is used as in example 10 where the 5 minute peel value was 25 N/1.27 or example 9 where the 5 minute peel value was 29 N/1.27 cm, both having a smooth peel which is desirable in some cases.

Table 4:

| Example | Core type | | | | Core thickness [µm] | Skin type [wt.%] | Skin thickness [µm] |
|---------|-----------|---|---|---|---------------------|------------------|---------------------|
| | EHA, [wt. %] | NVC., [wt. %] | Tackifier, [wt.%] | Plasticizer, [wt.%] | | | |
| 9 | 65 | 35 | 15 | 0 | 1000 | IOA/AA/MA 65/5/30 | 60 |
| 10 | 65 | 35 | 10 | 5 | 1000 | IOA/AA/MA 65/5/30 | 60 |

Table 4:   (continued)

| Example | Core type | | | | Core thickness [μm] | Skin type [wt.%] | Skin thickness [μm] |
|---|---|---|---|---|---|---|---|
| | EHA, [wt. %] | NVC., [wt. %] | Tackifier, [wt.%] | Plasticizer, [wt.%] | | | |
| 11 | 68 | 32 | 0 | 0 | 1000 | IOA/AA/MA 65/5/30 | 60 |
| 12 | 70 | 30 | 15 | 0 | 1000 | IOA/AA/MA 65/5/30 | 60 |
| 13 | 70 | 30 | 25 | 0 | 1000 | IOA/AA/MA 65/5/30 | 60 |
| 14 | 70 | 30 | 10 | 5 | 1000 | IOA/AA/MA 65/5/30 | 60 |
| 15 | 65 | 35 | 15 | 0 | 1000 | IOA/AA/ MA*65/5/30 | 60 |
| 16 | 68 | 32 | 0 | 0 | 1000 | IOA/AA/ MA*65/5/30 | 60 |
| 17 | 61.4 | 38.6 | 12.5 (2) | 1.1 | 1000 | None | None |
| C9 | #4910 | | | | 1000 | IOA/AA/MA 65/5/30 | 60 |
| C10 | #4910 | | | | 1000 | IOA/AA/ MA* 65/5/30 | 60 |

* including a polyamide primer layer
(1) Regalrez 6108 tackifier
(2) Regalite R 7100 tackifier

Table 5:

| | Properties of laminated tape | | | |
|---|---|---|---|---|
| Example | 90° peel adhesion (N / 1.27 cm), from polycarbonate (72 hr dwell time) | 90° peel adhesion (N /1.27 cm), from polycarbonate (5 min dwell time) | Static shear at 70° C, (min) from stainless steel | Humidity resistance (days) |
| 9 | 55 | 29 | > 10,000 | 10 |
| 10 | 48 | 25 | > 10,000 | 10 |
| 11 | 40 | | > 10,000 | > 15 |
| 12 | 58 | | > 10,000 | 6 |
| 13 | 58 | | > 5,000 | 3 |
| 14 | 48, delam.* | | > 1,080 | 6 |
| 15 | 21, delam.* | | 30, delam* | -- |
| 16 | 21, delam.* | | 16, delam* | 9 |
| 17 | | 18 | | |

* separation force between core and skin

Table 5: (continued)

| Properties of laminated tape | | | | |
|---|---|---|---|---|
| Example | 90° peel adhesion (N / 1.27 cm), from polycarbonate (72 hr dwell time) | 90° peel adhesion (N /1.27 cm), from polycarbonate (5 min dwell time) | Static shear at 70° C, (min) from stainless steel | Humidity resistance (days) |
| C9 | 10, delam.* | | 3, delam* | -- |
| C10 | 34 | | > 6,000 | -- |

* separation force between core and skin

### Example 18

Example 18 shows a multilayer laminate the first pressure-sensitive adhesive layer of which comprises pyrrolidone ethyl acrylate (PYEA) as a Lewis base-functional monomer.

### Comparative example 11

Example 18 was repeated with the exception that a polyamide primer layer (Macromelt™ 4260 from Henkel) was incorporated between the pressure-sensitive adhesive skin and the core.

Table 6:

| Compositions with PYEA | | | | | | | |
|---|---|---|---|---|---|---|---|
| Example | Core type | | | | Core thickness, [μm] | Skin type [wt.%] | Skin thickness [μm] |
| | EHA [wt.%] | IBOA [wt. %] | PYEA [wt.%] | AA [wt.%] | | | |
| 18 | 66.5 | 20.0 | 12.5 | 1.0 | 1000 | IOA/AA/MA 65/5/30 | 60 |
| C11 | 66.5 | 20.0 | 12.5 | 1.0 | 1000 | IOA/AA/ MA*65/5/30 | 60 |

* polyamide primer layer (Macromelt™ 4260) between transfer tape and core

Table 7:

| Properties of tapes comprising PYEA | | | |
|---|---|---|---|
| Example | 90° peel adhesion (N / 1.27 cm), from polycarbonate | Static shear at 70° C (min), from stainless steel | Humidity resistance, days |
| 18 | 45, coh failure of core | 80, delam.* | 9 |
| C11 | 2, delam* | 7, delam.* | -- |

* Separation force between skin and core

-- Not measured

## Claims

**1.**   A transparent pressure-sensitive adhesive layer

• the pressure- sensitive adhesive of which comprises

(i) the reaction product obtainable by polymerizing a precursor comprising

(a) one or more alkyl (meth)acrylate monomers the alkyl groups of which comprise independently from each other 4 to 20 carbon atoms, and
(b) one or more moderately polar Lewis base-functional copolymerizable monomers, and

(ii) one or more tackifying resins

wherein

- the concentration of the alkyl acrylate monomer or monomers and the thickness of the pressure-sensitive adhesive layer are selected so that the pressure-sensitive adhesive layer has a 90° peel adhesion from polycarbonate as measured according to FINAT method no. 2 after a dwell time of 72 h of at least 35 N/1.27 cm.

2. Pressure-sensitive adhesive layer according to claim 1 wherein the one or more alkyl (meth)acrylate monomers are present in a concentration of from 59 - 80 wt.% with respect to the masses of the one or more alkyl acrylate monomers, the one or more moderately polar Lewis base-functional copolymerizable monomers and, if present, any other copolymerizable monomer or monomers.

3. Pressure-sensitive adhesive layer according to any of the preceding claims wherein the thickness of the pressure-sensitive adhesive layer is at least 500 μm.

4. Pressure-sensitive adhesive layer according to any of the preceding claims wherein the Lewis base-functional copolymerizable monomer or monomers are selected from a group comprising N-vinyl containing monomers, acryloyl morpholine and pyrrolidone ethyl acrylate.

5. Pressure-sensitive adhesive layer according to claim 4 comprising N-vinylcaprolactam as a Lewis base-functional monomer.

6. Pressure-sensitive adhesive layer according to any of the preceding claims wherein the one or more Lewis base-functional copolymerizable monomer or monomers are present in an amount of from 20 - 41 wt.% with respect to the masses of the one or more alkyl acrylate monomers, the one or more moderately polar Lewis base-functional copolymerizable monomers and, if present, any other copolymerizable monomer or monomers.

7. Pressure-sensitive adhesive layer according to any of the preceding claims comprising at least one tackifying resin obtained by the polymerization of a precursor composition comprising optionally partly or fully hydrogenated α-methyl styrene.

8. Pressure-sensitive adhesive layer according to any of the preceding claims wherein one or more tackyfying resins are present in an amount of from 5 - 75 wt.% with respect to the sum of the masses of the one or more alkyl acrylate monomers, the one or more moderately polar Lewis base-functional copolymerizable monomers and, if present, any other copolymerizable monomer or monomers.

9. Pressure-sensitive adhesive layer according to any preceding claim where the pressure-sensitive adhesive of the pressure-sensitive adhesive layer has a static shear from stainless steel at 70°C as measured according to PSTC - 7/C of at least 2,000 min.

10. Pressure-sensitive adhesive film comprising at least one pressure-sensitive adhesive layer according to any preceding claim which is applied to a backing.

11. Transparent multilayer laminate comprising

- a first pressure-sensitive adhesive layer the pressure-sensitive adhesive of which comprises the reaction product obtainable by polymerizing a precursor comprising

(a) one or more alkyl (meth)acrylate monomers the alkyl groups of which comprise independently from each other 4 to 20 carbon atoms, and
(b) one or more moderately polar Lewis base-functional copolymerizable monomers,

- at least one second pressure-sensitive adhesive layer laminated onto the first pressure-sensitive adhesive layer the pressure-sensitive adhesive of the second pressure-sensitive adhesive layer comprises the reaction product obtainable by polymerizing a precursor comprising

> (c) one or more alkyl (meth)acrylate monomers the alkyl groups of which comprise independently from each other 4 to 20 carbon atoms, and
> (d) one or more strongly polar copolymerizable monomers,

**12.** Multilayer laminate according to claim 11 wherein the strongly polar copolymerizable monomer is selected from a group comprising acrylic acid, methacrylic acid, fumaric acid, maleic acid and acrylonitrile.

**13.** Multilayer laminate according to any of claims 11 - 12 wherein the ratio of the thickness of the second pressure-sensitive adhesive layer over the thickness of the first pressure-sensitive adhesive layer is less than 0.2 .

**14.** Multilayer laminate according to any of claims 11 - 13 wherein the first pressure-sensitive adhesive layer is a layer according to any of claims 1 - 9.

## European Patent Office

## EUROPEAN SEARCH REPORT

**Application Number**

EP 01 10 8135

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 876 855 A (LAU FELIX P ET AL) 2 March 1999 (1999-03-02) * claims 1-6 * | 1-14 | C09J7/02 C09J4/06 C08L33/08 C08L33/10 |
| | | | **TECHNICAL FIELDS SEARCHED (Int.Cl.7)** C09J C08L |

The present search report has been drawn up for all claims

| Place of search | Date of completion of the search | Examiner |
|---|---|---|
| MUNICH | 17 May 2001 | Ehrenreich, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 01 10 8135

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2001

| Patent document cited in search report | Publication date | Patent family member(s) | Publication date |
|---|---|---|---|
| US 5876855 A | 02-03-1999 | AU 701664 B | 04-02-1999 |
| | | AU 1465297 A | 17-07-1997 |
| | | CA 2238327 A | 03-07-1997 |
| | | EP 0874646 A | 04-11-1998 |
| | | JP 2000502919 T | 14-03-2000 |
| | | WO 9723249 A | 03-07-1997 |

EPO FORM P0459

For more details about this annex : see Official Journal of the European Patent Office, No. 12/82